# EUROPÄISCHE PATENTANMELDUNG

(11) **EP 2 695 747 A1**
(43) Veröffentlichungstag der Anmeldung: **12.02.2014**
(21) Anmeldenummer: 13003916.7
(22) Anmeldetag: 06.08.2013
(51) Int. Cl.: B60B 33/00, B60B 33/06

(54) **Verfahren zur Montage einer Laufrolle**

(30) Priorität: 10.08.2012 DE 102012015890
(71) Anmelder: AS Rollen GmbH, 42499 Hückeswagen (DE)
(72) Erfinder:
(74) Vertreter: Döpp, Ludger

(57) **Zusammenfassung**

Verfahren zur Montage eines, mit mindestens einer Rolle bestückbaren Bauteils, zumindest beinhaltend einen U-förmig ausgebildeten Grundkörper, ein Lager, insbesondere ein Kugellager, eine obere und eine untere Hülse sowie ein stiftartig ausgebildetes Steckelement, wobei zunächst das Lager zwischen den beiden Schenkeln eines metallischen Grundkörpers positioniert oder von Kunststoffmaterial eines zu erzeugenden Grundkörpers zumindest partiell umschlossen wird, anschließend die mit einem Ansatz versehene obere Hülse und die mit einer planen Fläche versehene untere Hülse in Richtung des Lagers bewegt und, das Lager zumindest partiell einschließend, mittel- oder unmittelbar zur Bildung des Bauteils miteinander verbunden werden, wobei zumindest eine der Hülsen mit einem Aufnahmebereich für das Steckelement versehen ist.

## Beschreibung

Die Erfindung betrifft ein Verfahren zur Montage eines mit mindestens einer Rolle bestückbaren Bauteils zumindest beinhaltend einen U-förmig ausgebildeten Grundkörper, ein Lager, insbesondere ein Kugellager, eine obere und eine untere Hülse sowie ein stiftartig ausgebildetes Steckelement

Der DE 20 2010 012 904 U1 ist eine Lenkrolle zu entnehmen, umfassend zumindest ein Montageelement zur Befestigung der Lenkrolle an zumindest einem durch die Lenkrolle zumindest teilweise zu tragenden Gegenstand, zumindest ein um eine erste Schwenkachse relativ zu dem Montageelement drehbar gelagertes Trageelement und zumindest ein um eine erste Drehachse drehbar am Trageelement gelagertes Rad, wobei zumindest eine Federeinrichtung vorgesehen ist

Die WO 2010/007293 A1 offenbart eine Befestigungseinrichtung, die ein Lager mit einer zentralen Öffnung beinhaltet. In diese Öffnung werden eine etwa wellenartig ausgebildete Stange und Rückhaltemittel eingebracht. Die Rückhaltemittel beinhalten einen äußeren Rastzahn, der mit dem Lager zusammenwirkt. Durch diese Maßnahme wird eine spielfreie Verbindung erzeugt..

Die dem Stand der Technik zu entnehmenden Laufrollen sind aufwendig herstellbar und können vielfach nur als komplettes Bauteil an Kunden verschickt werden. Kunden, die andere Anforderungen an die später einzusetzende Laufrolle haben, können selbige nur mit großem Aufwand umrüsten, was mit unnötigen Kosten einhergeht.

Ziel des Erfindungsgegenstandes ist es, ein Verfahren zur Montage eines, mit mindestens einer Rolle bestückbaren Bauteils bereitzustellen, mittels welchem ein vormontiertes Laufrollenbauteil erzeugt wird, das in Abhängigkeit vom jeweiligen Einsatzfall anwenderseitig mit beliebigen weiteren Bauteilen nach- bzw. umgerüstet werden kann.

Darüber hinaus soll ein vormontiertes Laufrollenbauteil vorgestellt werden, das einfach im Aufbau und für Nach- bzw. Umrüstzwecke geeignet ist.

Dieses Ziel wird dadurch erreicht, dass zunächst das Lager zwischen den beiden Schenkeln eines metallischen Grundkörpers positioniert oder von Kunststoffmaterial eines zu erzeugenden Grundkörpers zumindest partiell umschlossen wird, anschließend die mit einem Ansatz versehene obere Hülse und die mit einer planen Fläche versehene untere Hülse in Richtung des Lagers bewegt und, das Lager zumindest partiell einschließend, mittel- oder unmittelbar zur Bildung des Bauteils miteinander verbunden werden, wobei zumindest eine der Hülsen mit einem Aufnahmebereich für das Steckelement versehen ist.

Vorteilhafte Weiterbildungen des erfindungsgemäßen Verfahrens sind den zugehörigen verfahrensgemäßen Unteransprüchen zu entnehmen.

Das Ziel wird einrichtungsgemäß auch erreicht durch zwei, insbesondere durch Schweißen oder Kleben, miteinander in Wirkverbindung bringbare Hülsen sowie ein stiftartig ausgebildetes Steckelement, das nach Art einer Schnappverbindung lösbar, zumindest mit Teilen zumindest einer der Hülsen, verbunden ist.

Vorteilhafte Weiterbildungen des erfindungsgemäßen Laufrollenbauteils sind den zugehörigen gegenständlichen Unteransprüchen zu entnehmen.

Mit dem erfindungsgemäßen Verfahren kann nun ein vormontiertes oder vorgefertigtes Laufrollenbauteil bereitgestellt werden, das nach Art eines Baukastens anwenderseitig komplettiert werden kann. Die Erzeugung eines insbesondere aus Kunststoff bestehenden Laufrollenbauteils kann vollautomatisch erfolgen.

Das Lager ist vorteilhafterweise als Kugellager ausgebildet, das von Kunststoffmaterial des zu bildenden Grundkörpers im Bereich seines radial äußeren Lagerrings umschlossen wird, wobei der Ansatz der einen Hülse, den inneren Lagerring des Lagers durchgreifend, in einer Ausnehmung der anderen Hülse eingebracht wird. Die vorzugsweise aus Kunststoff bestehenden Hülsen werden im Bereich ihrer Kontaktfläche durch Schweißen, insbesondere durch Ultraschallschweißen, respektive Kleben, miteinander verbunden.

Einem weiteren Gedanken der Erfindung gemäß, wird die obere Hülse mit dem Ansatz versehen, der in die Ausnehmung der unteren Hülse eingeführt wird, wobei der Ansatz und die korrespondierende innere Umfangsfläche der Hülse einen Kontakt bilden. In diesem Beispiel findet das Ultraschallschweißen statt.

Das im hülsenseitigen Aufnahmebereich stiftartig ausgebildete Einsteckelement wird vorzugsweise in einen offenen Abschnitt der oberen Hülse eingeführt und zumindest mit dem Ansatz der oberen Hülse lösbar in Wirkverbindung gebracht.

Die andersartige Positionierung der beiden Hülsen ist, vom Anwendungsfall abhängig, natürlich ebenfalls denkbar.

Das Einsteckelement wird ansatzseitig mit Profilierungen versehen, die, zur Erzeugung einer lösbaren Verbindung, mit entsprechenden Gegenprofilen des aufnehmenden Hülsenabschnitts in Wirkverbindung gebracht werden. Dies geschieht vorzugsweise durch Eindrücken des Einsteckelements in die zugehörige Hülse.

Das so vormontierte Laufrollenbauteil (mit oder ohne Einsteckelement) kann, einem weiteren Gedanken der Erfindung gemäß, so versendet werden. Auf Anwenderseite kann das Laufrollenbauteil, in Abhängigkeit vom jeweiligen Einsatz, mit mindestens einer Laufrolle, einer Platte, einer Verdrehsicherung oder dergleichen in Wirkverbindung gebracht werden.

Alternativ kann das Einsteckelement mit einem Gerät des Anwenders, beispielsweise einem Bettrahmen, einem Möbelteil oder dergleichen, verbunden werden. Dies kann den Vorteil haben, dass das Gerät gemeinsam mit dem Einsteckelement einer Behandlung, wie z.B. einer galvanischen Beschichtung oder dergleichen, unterzogen werden kann, ehe es mit dem Laufrollenbauteil in Wirkverbindung gebracht wird.

Einem weiteren Gedanken der Erfindung gemäß kann das Einsteckelement außerhalb der aufnehmenden Hülse mit einem Kopfteil versehen werden, das bedarfsweise zur Festlegung einer Platte, respektive einem beliebig ausgebildeten Befestigungselement, relativ zum Laufrollenbauteil dienen kann.

Der Erfindungsgegenstand ist anhand eines Ausführungsbeispiels in der Zeichnung dargestellt und wird wie folgt beschrieben. Es zeigen:
- Figur 1: Prinzipskizze eines vormontierten Laufrollenbauteils;
- Figur 2: Teildarstellung der Figur 1 samt Darstellung der Einzelbauteile;
- Figur 3: Darstellung eines nachrüstbaren Laufrollenbauteils in verschiedenen Ansichten;
- Figur 4: Darstellung unterschiedlich gestalteter Hülsen
- Figur 5: Explosionszeichnung von Laufrollenbauteilen, die mit unterschiedlichen Hülsen versehen sind;
- Figur 6: Verschiedene Ansichten bzw. Schnitte durch ein Laufrollenbauteil.

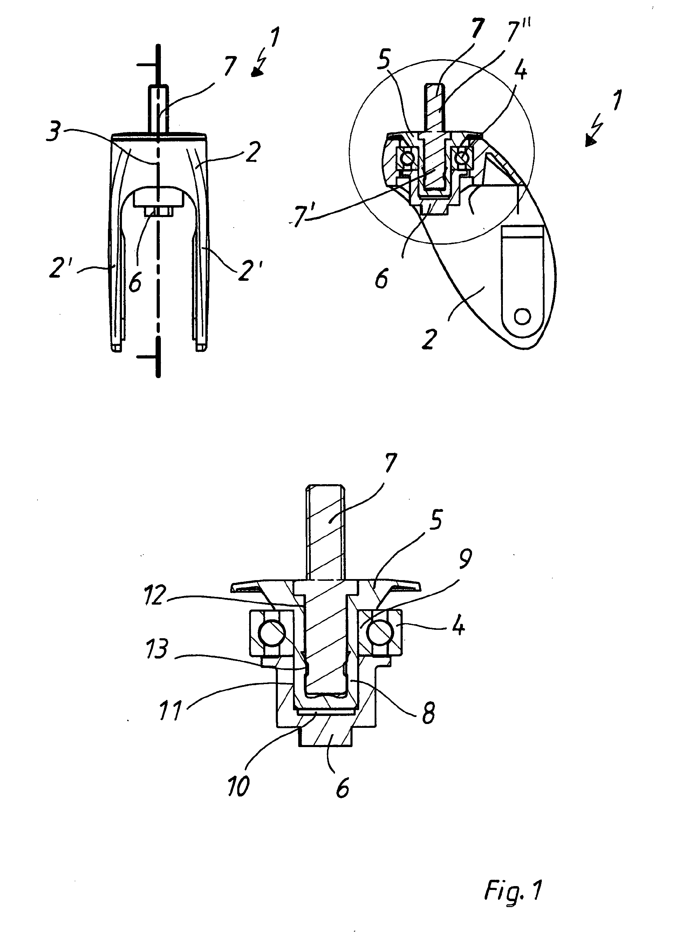

Figur 1 zeigt als Prinzipskizze ein vormontiertes Laufrollenbauteil 1 in verschiedenen Ansichten bzw. Schnitten. Das Laufrollenbauteil 1 wird gebildet durch einen gabelförmig ausgebildeten Grundkörper 2, beinhaltend zwei parallel zueinander verlaufende Schenkel 2' sowie einen beide Schenkel 2' miteinander verbindenden Abschnitt 3. Der gabelförmige Grundkörper 2 hat somit die Querschnittsform eines U. In diesem Beispiel soll der Grundkörper 2 aus Kunststoff bestehen und im Verlauf eines Herstellungsprozesses mit einem Kugellager 4 beispielsweise durch Spritzgießen in Wirkverbindung gebracht worden sein. Des Weiteren erkennbar ist eine obere Hülse 5, eine untere Hülse 6 sowie ein stiftartig ausgebildetes Einsteckelement 7. Das Einsteckelement 7 kann - je nach Anwendungsfall - aus Metall oder Kunststoff bestehen. Es hat einen stiftartig ausgebildeten Abschnitt 7' sowie einen Verbindungsabschnitt 7". Die Hülsen 5,6 sollen in diesem Beispiel aus Kunststoff bestehen. Die obere Hülse 5 verfügt über einen zylindrischen Ansatz 8, der das Kugellager 4 im Bereich seines inneren Lagerrings 9 durchgreift und in einer, in der unteren Hülse 6 eingebrachten Ausnehmung 10 geführt ist. Der Bereich 11 bildet umlaufende Kontaktflächen zwischen dem Ansatz 8 und der Hülse 6, die nach der Vormontage des Laufrollenbauteils 1 durch Ultraschallschweißen oder Kleben miteinander verbunden werden. In diesem Beispiel wird der stiftartige Abschnitt 7' des Einsteckelements 7 zur Erzeugung einer lösbaren Verbindung mit der oberen Hülse 5 in einen dort vorgesehenen Aufnahmebereich 12 eingebracht. Der Aufnahmebereich 12 und der stiftartige Abschnitt 7' des Einsteckelements 7 sind mit korrespondierenden Profilierungen 13 versehen, über welche die lösbare Verbindung zwischen Einsteckelement 7 und Hülse 5 hergestellt wird. Je nach Anwendungsbereich kann das Einsteckelement 7 verbindungsabschnittsseitig unterschiedlich ausgebildet werden und muss nicht zwangsläufig Teil des vormontierten Laufrollenbauteils 1 sein.

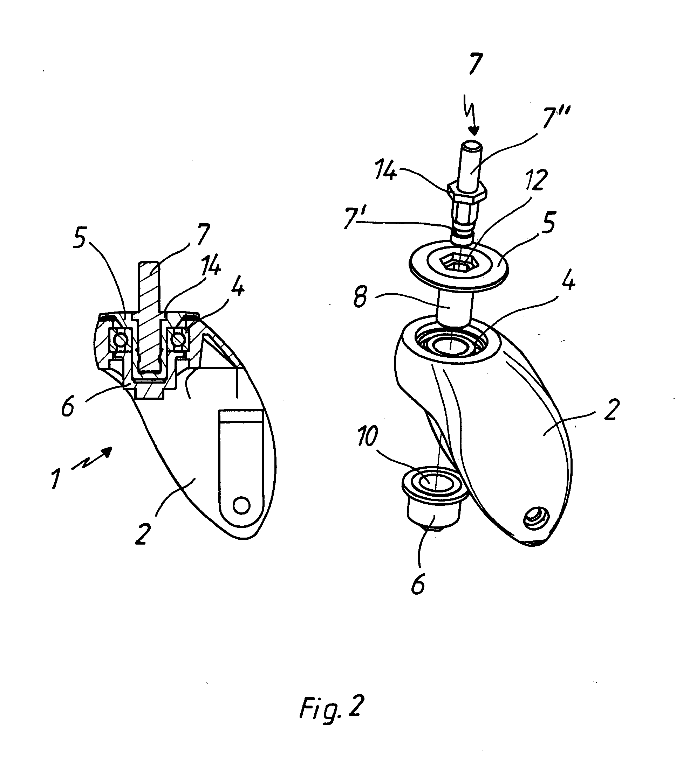

Figur 2 zeigt als Teildarstellung das vormontierte Laufrollenbauteil 1 gemäß Figur 1 sowie als Explosionszeichnung. Gleiche Bauteile sind mit gleichen Bezugszeichen versehen. Erkennbar ist der U-förmig ausgebildete Grundkörper 2, das Kugellager 4, die obere Hülse 5, die untere Hülse 6 sowie das Einsteckelement 7. Ebenfalls erkennbar ist die Ausnehmung 10 in der unteren Hülse 6, der Ansatz 8 an der oberen Hülse 5 sowie der Aufnahmebereich 12 für das Einsteckelement 7 in der oberen Hülse 5. Das Einsteckelement 7 ist, in Analogie zum offenen Abschnitt 12, mit einem Sechskantprofil 14 versehen, so dass eine Relativbewegung ausgeschlossen ist.

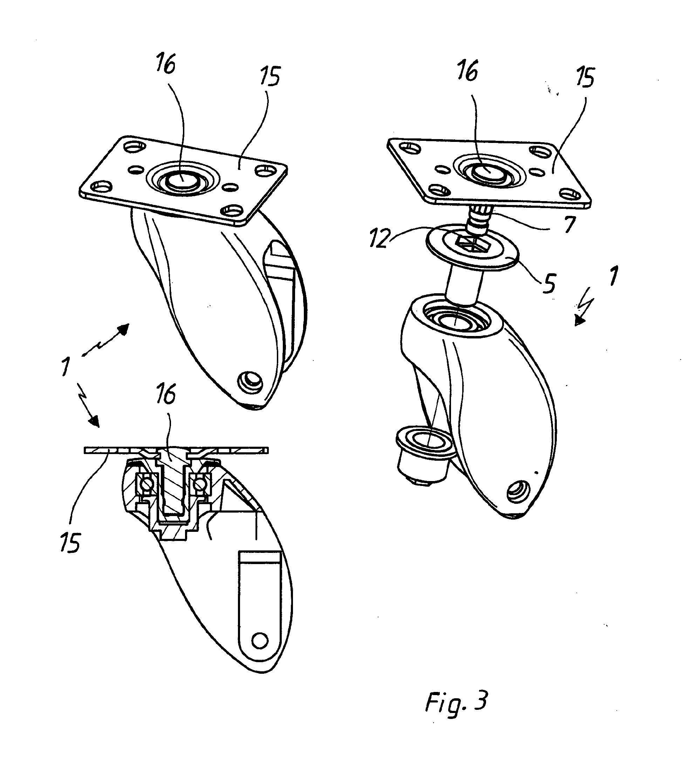

Figur 3 zeigt eine weitergehende Ausführungsform zur Nachrüstung des Laufrollenbauteils 1. Gleiche Bauteile sind auch hier mit gleichen Bezugszeichen versehen. Abweichend zu Figur 2 kommt bei Figur 3 eine obere Platte 15 zum Einsatz. Der zylindrisch ausgebildete Teil des Einsteckelements 7 gemäß Figur 2 ist in Figur 3 mit einem Kopfteil 16 versehen. Durch Eindrücken des Einsteckelements 7 in den offenen Abschnitt 12 der oberen Hülse 5 wird die Platte 15 gegenüber der oberen Hülse 5 und somit auch gegenüber dem Laufrollenbauteil 1 fixiert. Diese Platte 15 kann beispielsweise unter Bettgestelle, Möbel oder dergleichen geschraubt werden.

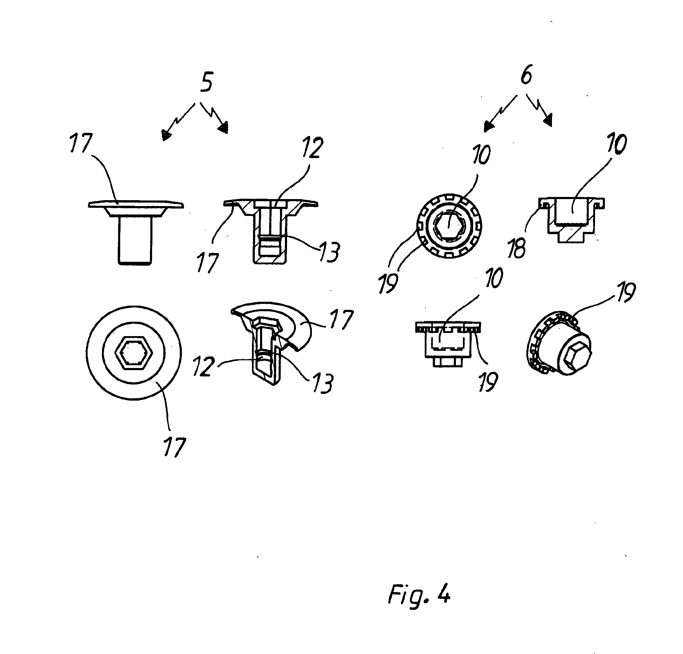

Figur 4 zeigt unterschiedlich ausgebildete obere Hülsen 5 und untere Hülsen 6. Die Hülse 5 beinhaltet den Aufnahmebereich 12 sowie einen umlaufenden Randabschnitt 17. Darüber hinaus sind die in Figur 1 dargestellten Profilierungen 13 gegeben. An der Hülse 6 ist die Ausnehmung 10 erkennbar. Der Randbereich 18 ist mit einem nach unten weisenden Zahnprofil 19 versehen, dessen Funktion später beschrieben wird.

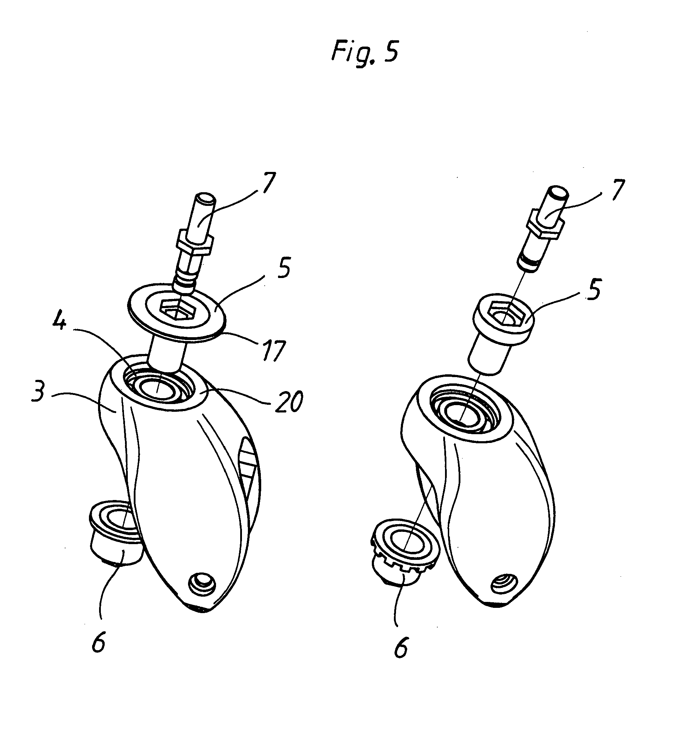

Figur 5 zeigt unterschiedlich ausgebildete obere und untere Hülsen 5,6 sowie ebenfalls unterschiedlich ausgebildete Einsteckelemente 7, wobei die bisher beschriebene Funktion der genannten Bauteile identisch ist.

Im linken Teil der Figur 5 kommt die obere Hülse 5 gemäß Figur 4 zum Einsatz, während die untere Hülse 6 in Figur 1 dargestellt ist. Der Randabschnitt 17 der oberen Hülse 5 dient hierbei zum Schutz des Kugellagers 4, indem er im montierten Zustand auf einem Auflagebereich 20 des Abschnitts 3 aufliegt.

Im rechten Teil der Figur 5 kommt eine untere Hülse 6 zum Einsatz, wie sie in Figur 4 dargestellt ist. Die obere Hülse 5 ist etwa schraubenartig ausgebildet und nimmt, wie bereits beschrieben, das Einsteckelement 7 auf.

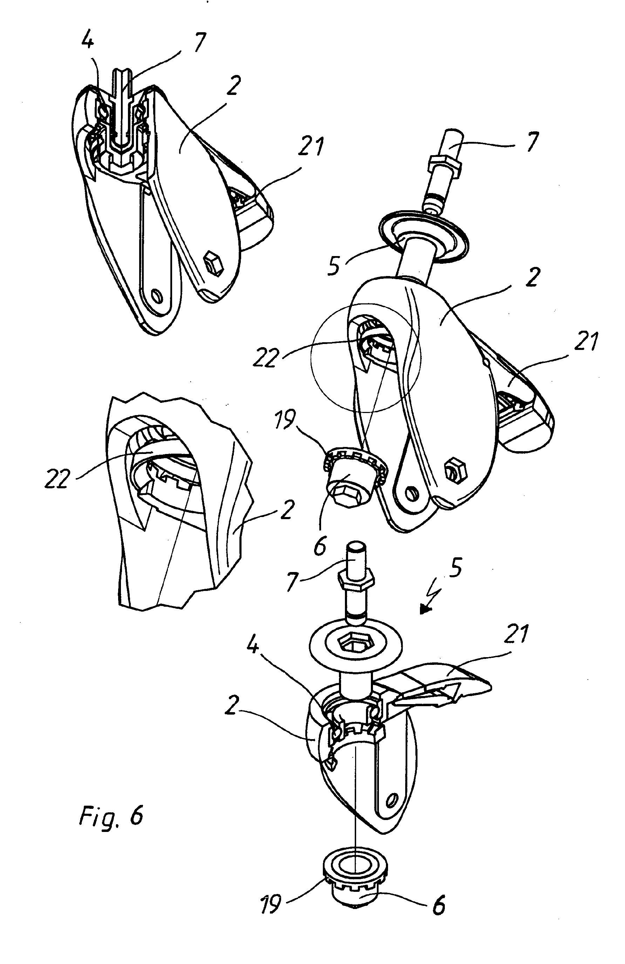

Figur 6 zeigt in verschiedenen Ansichten bzw. Schnitten den linken Teil der Figur 5, jedoch noch erweitert um einen Bremshebel 21 und eine Bremsfeder 22. Auch hier sind die gleichen Bauteile wie vorab beschrieben gegeben, nämlich der etwa U-förmig ausgebildete Grundkörper 2, das Kugellager 4, die obere Hülse 5, die untere Hülse 6 sowie das Einsteckelement 7. Die untere Hülse 6 ist in Analogie zu Figur 4 aufgebaut und mit einem Zahnkranz 19 versehen. Die Bremsfeder 22 ist mit einem Gegenprofil versehen, das in den Zahnkranz 19 eingreift (nicht erkennbar). Liegen die Profile ineinander ist eine Relativbewegung zwischen den betroffenen Bauteilen nicht mehr möglich.

Für einen optimalen Fertigungsablauf kann der Bremshebel 21 samt Bremsfeder 22 gemeinsam mit dem Laufrollenbauteil in Wirkverbindung gebracht werden, so dass dieses vormontierte Bauteil dann an den Anwender geschickt werden kann.

## Patentansprüche

1. Verfahren zur Montage eines, mit mindestens einer Rolle bestückbaren Bauteils (1), zumindest beinhaltend einen U-förmig ausgebildeten Grundkörper (2), ein Lager, insbesondere ein Kugellager (4), eine obere (5) und eine untere Hülse (6) sowie ein stiftartig ausgebildetes Steckelement (7), **dadurch gekennzeichnet, dass** zunächst das Lager (4) zwischen den beiden Schenkeln (2') eines metallischen Grundkörpers (2) positioniert oder von Kunststoffmaterial eines zu erzeugenden Grundkörpers (2) zumindest partiell umschlossen wird, anschließend die mit einem Ansatz (8) versehene obere Hülse (5) und die mit einer planen Fläche versehene untere Hülse (6) in Richtung des Lagers (4) bewegt und, das Lager (4) zumindest partiell einschließend, mittel- oder unmittelbar zur Bildung des Bauteils (1) miteinander verbunden werden, wobei zumindest eine der Hülsen (5,6) mit einem Aufnahmebereich (12) für das Steckelement (7) versehen ist.

2. Verfahren nach Anspruch 1, **dadurch gekennzeichnet, dass** das Lager (4) als Kugellager ausgebildet wird, das von Kunststoffmaterial des zu bildenden Grundkörpers (2) im Bereich seines radial äußeren Lagerrings, insbesondere durch Spritzgießen, umschlossen wird, der Ansatz (8) der oberen Hülse (5), den inneren Lagerring (9) des Lagers (4) durchgreifend, in eine Ausnehmung (10) der unteren Hülse (6) eingebracht wird und die Hülsen (5,6) im Bereich ihrer Kontaktflächen (11) durch Schweißen oder Kleben miteinander verbunden werden.

3. Verfahren nach Anspruch 1 oder 2, **dadurch gekennzeichnet, dass** die die Hülsen (5,6) aus Kunststoff bestehen, wobei die obere Hülse (5) mit dem Ansatz (8) versehen wird, der in die Ausnehmung (10) der unteren Hülse (6) eingeführt wird, und wobei der Ansatz (8) und die korrespondierende innere Umfangsfläche der unteren Hülse (6) durch Ultraschallschweißen oder Kleben miteinander verbunden werden.

4. Verfahren nach einem der Ansprüche 1 bis 3, **dadurch gekennzeichnet, dass** das aus Metall oder Kunststoff bestehende Einsteckelement (7) in einen den Aufnahmebereich bildenden offenen Abschnitt (12) der oberen Hülse (5) eingeführt und zumindest in seinem stiftartig ausgebildeten Abschnitt (7') mit dem Ansatz (8) lösbar in Wirkverbindung gebracht wird.

5. Verfahren nach einem der Ansprüche 1 bis 4, **dadurch gekennzeichnet, dass** das Einsteckelement (7) in seinem stiftartig ausgebildeten Abschnitt hülsenseitig mit Profilierungen (13) versehen wird, die mit Gegenprofilen des aufnehmenden Hülsenabschnitts in Wirkverbindung gebracht werden.

6. Verfahren nach einem der Ansprüche 1 bis 5, **dadurch gekennzeichnet, dass** das Einsteckelement (7) außerhalb der aufnehmenden Hülse (5) mit einem Kopfteil (16) versehen wird, das mit einer oberhalb des Bauteils (1), vorsehbaren Platte (15), respektive einem andersartigen Befestigungselement, in Wirkverbindung gebracht wird.

7. Laufrollenbauteil, hergestellt nach dem Verfahren gemäß einem der Ansprüche 1 bis 6, beinhaltend einen U-förmig ausgebildeten, mit einem Lager (4), insbesondere einem Kugellager, in Wirkverbindung stehenden Grundkörper (2), **gekennzeichnet durch** zwei, insbesondere **durch** Schweißen oder Kleben, miteinander in Wirkverbindung bringbare Hülsen (5,6) sowie ein stiftartig ausgebildetes Steckelement (7), das nach Art einer Schnappverbindung lösbar, zumindest mit Teilen (8) zumindest einer der Hülsen (5), verbunden ist.

8. Laufrollenbauteil nach Anspruch 7, **dadurch gekennzeichnet, dass** die Hülsen (5,6) aus Kunststoff bestehen und nach ihrer lagerseitigen Positionierung, insbesondere durch Ultraschallschweißen oder Kleben - das Lager (4) zumindest partiell umgreifend - miteinander verbindbar sind.

9. Laufrollenbauteil nach Anspruch 7 oder 8, **dadurch gekennzeichnet, dass** die Hülsen (5,6) dergestalt ausgebildet sind, dass die untere Hülse (6) mit einer im Wesentlichen ebenen Fläche ausgebildet ist, während die obere Hülse (5) einen Ansatz (8) beinhaltet, der, das Lager (4) durchgreifend, in der Ausnehmung (10) der unteren Hülse (6) geführt ist.

10. Laufrollenbauteil nach einem der Ansprüche 7 bis 9, **dadurch gekennzeichnet, dass** der Grundkörper (2) mit weiteren Elementen, wie mindestens einer Laufrolle, einer mit einem Bremshebel (21) versehenen Bremsfeder (22), einer Platte (15) oder einer Verdrehsicherung in Wirkverbindung bringbar ist.

11. Laufrollenbauteil nach einem der Ansprüche 7 bis 10, **dadurch gekennzeichnet, dass** bei Einsatz eines Bremshebels (21) die selbigem zugewandte Stirnfläche der Hülse (6) mit einem insbesondere als Zahnkranz (19) ausgebildetem Profil versehen ist, in welches ein Gegenprofil des Bremshebels (21) einbringbar ist.
